# EUROPÄISCHE PATENTANMELDUNG

(11) **EP 1 217 811 A1**
(43) Veröffentlichungstag der Anmeldung: **26.06.2002**
(21) Anmeldenummer: 00127825.8
(22) Anmeldetag: 19.12.2000
(51) Int. Cl.: H04M 3/22, G06F 13/10, H04L 12/26

(54) **Verfahren zum Emulieren eines Terminals und Testgerät zum Testen eines Telekommunikationsnetzwerks mit Funktionswahl mittles Windows Benutzerschnittstelle**

(71) Anmelder: Tektronix, Inc., Beaverton, OR 97077-0001 (US)
(72) Erfinder: Hoffmann, Holger, Dipl.-Ing., 15827 Blankenfelde (DE)
(74) Vertreter: Schurack, Eduard F.

(57) **Zusammenfassung**

Die vorliegende Erfindung betrifft ein Verfahren zum Emulieren eines Terminals zum Testen eines Telekommunikationsnetzwerks, wobei dem Terminal eine zur Durchführung eines automatischen Kommunikationsablaufs von einem Benutzer programmierbare Benutzerschnittstelle (20) zugeordnet ist, wobei die Programmierung der Benutzerschnittstelle zunächst das Bereitstellen einer Vielzahl von Schlüsselwörtern umfaßt, aus denen ein Kommunikationsablauf eines Terminals zusammenstellbar ist, wobei mit jedem Schlüsselwort ein Programmcode korreliert ist. Weiterhin wird eine Eingabemaske (58) auf einer Anzeigevorrichtung bereitgestellt, in die durch einen Benutzer eine Abfolge von mindestens zwei Schlüsselwörtern zur Zusammenstellung des Kommunikationsablaufs des Terminals eingebbar ist. Schließlich werden die Programmcodes, die mit den von einem Benutzer in die Eingabemaske eingegebenen Schlüsselwörtern korreliert sind, zu einem ausführbaren Programm verbunden. Sie betrifft weiterhin ein Testgerät zum Testen eines Telekommunikationsnetzwerks mit einer Speichervorrichtung, in der Schlüsselwörter abgelegt sind, aus denen ein Kommunikationsablauf mindestens eines Terminals zur Teilnahme an einer Kommunikation zusammenstellbar ist, sowie der mit jedem Schlüsselwort korrelierte Programmcode; einer Anzeigevorrichtung mit einer Eingabemaske (58), in die durch einen Benutzer eine Abfolge von mindestens zwei Schlüsselwörtern zur Zusammenstellung des Kommunikationsablaufs des mindestens einen Terminals eingebbar ist; und einer Kompiliervorrichtung, in der der Programmcode, der mit den von dem Benutzer in die Eingabemaske eingegebenen Schlüsselwörtern korreliert ist, zu einem ausführbaren Programm verbindbar ist.

## Beschreibung

Die vorliegende Erfindung betrifft das Testen von Telekommunikationsnetzwerken. Sie betrifft insbesondere ein Verfahren zum Emulieren eines Terminals zum Testen eines Telekommunikationsnetzwerks sowie ein entsprechendes Testgerät zum Testen eines Telekommunikationsnetzwerks.

In Telekommunikationsnetzwerken, insbesondere auch in offenen Kommunikationssystemen, werden digitale Daten gewöhnlich nach vorgegebenen Regeln übertragen. Eine Ausprägung derartiger Regeln sind sogenannte Protokolle. Zum Testen von Telekommunikationsnetzwerken werden Testgeräte, häufig sogenannte Protokolltester verwendet, die im Hinblick auf das in dem Netzwerk verwendete Protokoll konfigurierbar sind. Beispielhaft seien genannt die Protokolle GSM, ISDN, GPS, UMTS, CDMA, ISUP.

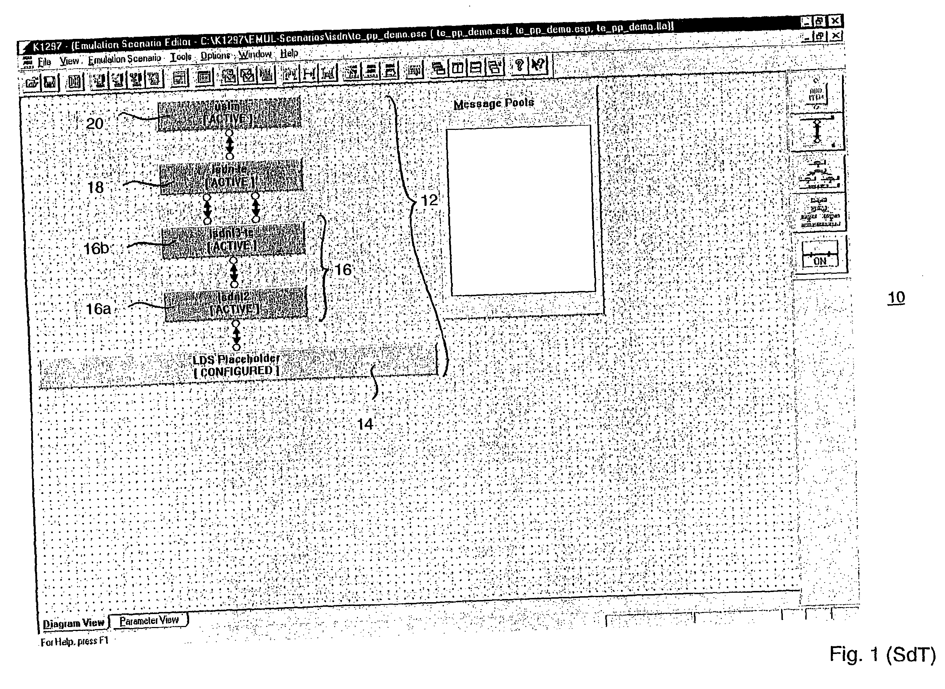

Zur Darstellung der der Erfindung zugrundeliegenden Problematik wird im Nachfolgenden zunächst auf einen aus dem Stand der Technik bekannten Protokolltester eingegangen, der von der Anmelderin der vorliegenden Anmeldung unter der Bezeichnung Tektronix K1297 vertrieben wird. Zum Testen eines Telekommunikationsnetzwerks wird der Protokolltester mit dem Telekommunikationsnetzwerk verbunden. Der Begriff "Testen" umfaßt sehr unterschiedliche Ausgestaltungen von Tests, von denen jedoch im Nachfolgenden nur einer detaillierter beleuchtet werden soll. Der erwähnte K1297 umfaßt einen Bildschirm, auf dem von einem Benutzer ein Testszenario kreiert werden kann. Die Eingabe eines Testszenarios erfolgt über Tastatur bzw. Computermaus. In Fig. 1 ist eine vom K1297 bekannte Benutzeroberfläche, die sogenannte Diagram View 10, wie Fig. 1 links unten zu entnehmen ist, angezeigt. In einem oberen und einem rechten Bereich der Benutzeroberfläche sind Ikons dargestellt, die in bekannter Weise durch Anklicken zum Öffnen von Menüs führen, die den Benutzer beim Erstellen eines Testszenarios unterstützen. Da sie im Hinblick auf die nachfolgenden Ausführungen von untergeordneter Bedeutung sind, wird hier nicht näher darauf eingegangen.

Das Architekturmodell für sogenannte offene Kommunikationssysteme wurde von dem internationalen Standardisierungsgremium, der ISO (International Standardization Organization), entwickelt. Das OSI-Referenzmodell (Open Systems Interconnection) gliedert die notwendigen Funktionen in eine hierarchische Schichtenstruktur. An dieser Schichtenstruktur hat sich der Aufbau eines Testszenarios in einem Protokolltester zu orientieren. In Fig. 1 ist mit 12 der von einem Benutzer kreierte sogenannte Protocol Stack dargestellt, wobei hier beispielhaft ein Protocol Stack zum Testen einer Kommunikation, die nach dem ISDN-Protokoll organisiert ist, dargestellt ist. Eine unterste Schicht 14 dient der Berücksichtigung der Schicht 1, d.h. der Bit-Übertragungsschicht (physical layer) sowie des Übertragungsmediums, beispielsweise der verwendeten Kabel, Kabelanschlüsse etc.. Darauf folgen mehrere Schichten 16, je nachdem auf welcher Schichtenebene der Test ablaufen soll. Im vorliegenden Beispiel sind eine zweite Schicht 16a (isdnl2 = ISDN Layer 2), sowie eine dritte Schicht 16b (isdnl3) dargestellt. Der Suffix -te bei der Schicht 16b deutet daraufhin, daß vorliegend die Terminalseite von dem Protokolltester emuliert werden soll (te = Terminal), während mit einem derartigen Protokolltester auch die Emulation der Netzwerkseite möglich ist, die dann durch einen Suffix -et gekennzeichnet wäre. Auf die dritte Schicht 16b folgt die ISDN-Terminalschicht 18, die eine Anpassung an die darunterliegende Schicht 16b sowie an eine darüberliegende Benutzerschnittstelle 20 (USIM) bereitstellt. Über die Benutzerschnittstelle 20 können von einem Benutzer gewünschte Testszenarien in den Protokolltester eingegeben werden, insbesondere durch Gestalten sogenannter Terminals, denen jeweils ein Terminal an der Testkommunikation zugeordnet ist. Pro Benutzerschnittstelle 20 können bis zu 240 Terminals programmiert werden. Der Benutzerschnittstelle ist eine Terminalschicht 18 zugeordnet.

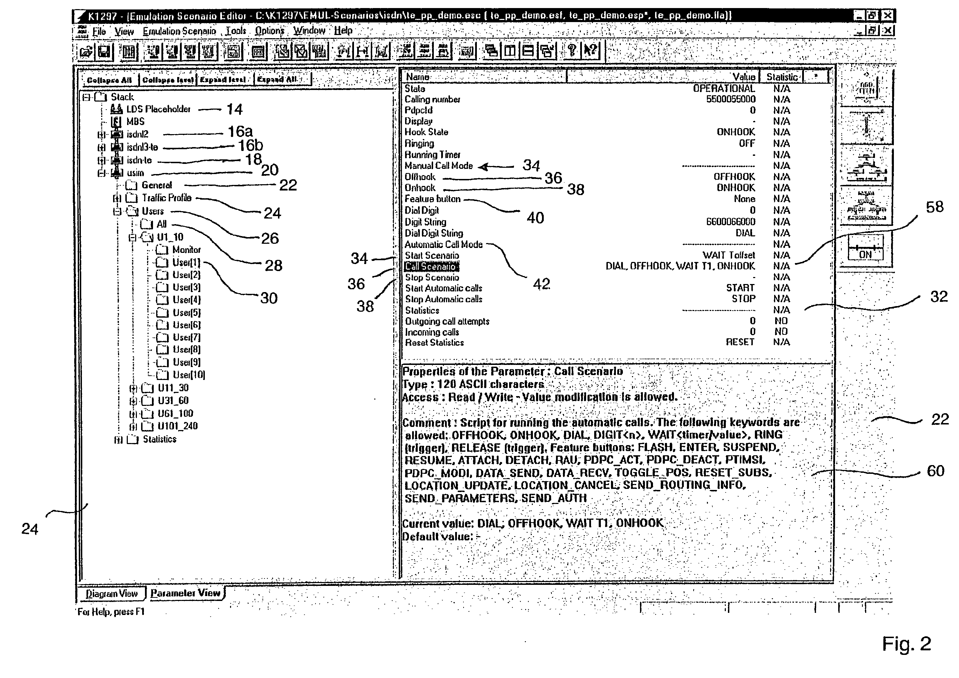

Wenngleich Fig. 2 bereits Merkmale der vorliegenden Erfindung zeigt, so kann die dort dargestellte Benutzeroberfläche Parameter View 22, insbesondere deren linkes Anzeigefenster 24, dazu dienen, die Erstellung eines Tests beim bekannten Protokolltester K1297 weiter zu beschreiben. Wie diesem Fenster 24 zu entnehmen ist, umfaßt der Protokolltester im zu emulierenden Protokoll-Stack die Emulierung der Schicht 14, der Schicht 16a, der Schicht 16b sowie der Terminalschicht 18. Die Benutzerschnittstelle 20 ermöglicht die Angabe allgemeiner Spezifikationsdaten in einem Menüpunkt 22 (general) sowie die Spezifizierung des auf dem Kommunikationsnetz stattfindenden Verkehrs in einem Menüpunkt 24 (traffic profile). Ein Menüpunkt 26 (users) ermöglicht die Spezifizierung des Verhaltens der an der Kommunikation beteiligten Terminal (Terminals). Hierbei kann angegeben werden, daß alle Terminal denselben Test ausführen, d.h. denselben Test-Kommunikationsablauf haben, siehe Menupunkt 28, bzw. können einzelnen Terminaln oder Terminalgruppen andere Kommunikationsabläufe zugewiesen werden. Zu diesem Zweck sind Menüpunkte U1_10, U11_30, U31_60, U61_100 sowie U101_240 angegeben, wobei U für User = Terminal steht und die Zahlenangaben mit den zugehörigen durchnummerierten Terminaln korrespondieren. In dem in Fig. 2 dargestellten Fall soll dem Terminal 1, siehe die Hinterlegung des Menüpunkts 30, eine Test-Kommunikationsablauf zugewiesen werden.

Der Benutzer hat nun die Wahl zwischen der manuellen oder der automatischen Ausführung eines Tests. Mit Bezug auf Fig. 2 ist im Fenster 32 rechts oben über den Menüpunkt 34 der manuelle Modus wählbar. Beim manuellen Modus können über weitere Menüpunkte, beispielhaft seien hier der Menüpunkt 36 (Offhook = Abheben [eines Telefons]) sowie der Menüpunkt 38 (Onhook = Auflegen [eines Telefons]) genannt. Beim Anklicken des jeweiligen Menüpunkts wird für den angegebenen Terminal 30 die entsprechende Aktion ausgeführt. Sonderfunktionen können über einen Menüpunkt 40 (feature button) eingegeben werden. Über einen Menüpunkt 42 kann der automatische Modus ausgewählt werden. Im Stand der Technik, d.h. beim K1297 in seiner bekannten Ausführungsform, kann beim automatischen Modus eines von zwei fest vorgegebene Testszenarien ausgewählt werden: Bei einem ersten Szenario hebt ein Terminal ab, macht innerhalb einer vorgegebenen Zeit selbst einen Anruf, wartet eine vorgegebene Zeit und legt dann wieder auf. Nach einem vorbestimmbaren Zeitraum beginnt der Test aufs Neue. Bei dem zweiten fest vorgegebenen Testszenario wird ein Terminal angerufen, hebt nach einer vorgegebenen Zeitspanne ab und legt nach einer vorgebbaren Zeit wieder auf. Ein Zeitraum ist einstellbar, nach dem sich dieser Ablauf wiederholt.

Der Nachteil dieser Lösung besteht darin, daß die zwei fest vorgegebenen Testszenarien, die im Automatikmodus wählbar sind, zwar für einige Testfälle ausreichend sind, jedoch Wünsche offen bleiben. Beispielsweise für Unterstützungsdienste (supplementary services) wie Anklopfen oder Makeln von Gesprächen besteht keine ausreichende Testmöglichkeit. Ebenso können fehlerhafte Anrufe, d.h. nur ein Teil der Nummer wird gewählt, nicht im Automatikmodus simuliert werden.

Eine Durchführung derartiger Tests im manuellen Modus wäre insbesondere bei mehreren Terminaln an der Testkommunikation äußerst umständlich und zeitraubend zu programmieren, so daß auch hier keine realistische Möglichkeit zur Durchführung der erwähnten Tests existiert. Jedoch können plausible Aussagen über die Funktionsfähigkeit eines Kommunikationsnetzes nur dann gemacht werden, wenn die auszuführenden Tests praxisnah sind. Insbesondere ist es wichtig, den Grenzbelastbarkeitsbereich eines Telekommunikationsnetzes zu ermitteln. Nur so können Aussagen gemacht werden, bis zu welcher Grenze die Funktionsfähigkeit des Telekommunikationsnetzes garantiert werden kann.

Der vorliegenden Erfindung liegt deshalb die Aufgabe zugrunde, ein Verfahren zum Emulieren eines Terminals zum Testen eines Testtelekommunikationsnetzwerks vorzuschlagen, das die Möglichkeit der durchzuführenden Tests signifikant erweitert. Die Aufgabe der vorliegenden Erfindung besteht auch darin, ein entsprechendes Testgerät vorzuschlagen.

Die erstgenannte Aufgabe wird gelöst durch ein Verfahren zum Emulieren eines Terminals zum Testen eines Kommunikationsnetzwerks, wobei dem Terminal eine zur Durchführung eines automatischen Kommunikationsablaufs von einem Benutzer programmierbare Benutzerschnittstelle zugeordnet ist, wobei für die Programmierung der Benutzerschnittstelle eine Vielzahl von Schlüsselwörtern bereitgestellt werden, aus denen ein Kommunikationsablauf mindestens eines Terminals an dem automatischen Kommunikationsablauf zusammenstellbar ist, wobei mit jedem Schlüsselwort ein Programmcode korreliert ist. Außerdem wird eine Eingabemaske auf einer Anzeigevorrichtung bereitgestellt, in die durch einen Benutzer eine Abfolge von mindestens zwei Schlüsselwörtern zur Zusammenstellung des Kommunikationsablaufs des mindestens einen Terminals eingebbar ist. Schließlich werden die Programmcodes, die mit dem von einem Benutzer in die Eingabemaske eingegebenen Schlüsselwörtern korreliert sind, zu einem ausführbaren Programm verbunden.

Die zweitgenannte Aufgabe wird gelöst von einem Testgerät zum Testen eines Telekommunikationsnetzwerks, welches eine Speichervorrichtung umfaßt, in der Schlüsselwörter abgelegt sind, aus denen ein Kommunikationsablauf mindestens eines Terminals an einer Kommunikation zusammenstellbar ist, sowie der mit jedem Schlüsselwort korrelierte Programmcode. Sie umfaßt weiterhin eine Anzeigevorrichtung mit einer Eingabemaske, in die durch einen Benutzer eine Abfolge von mindestens zwei Schlüsselwörtern zur Zusammenstellung des Kommunikationsablaufs des mindestens einen Terminals eingebbar ist. Weiterhin weist sie eine Kompiliervorrichtung auf, in der der Programmcode, der mit den von dem Benutzer in die Eingabemaske eingegebenen Schlüsselwörtern korreliert ist, zu einem ausführbaren Programm verbindbar ist.

Der Erfindung liegt die Erkenntnis zugrunde, daß dann einem Benutzer ein individuelles Erstellen von beliebigen Testszenarien ermöglicht wird, wenn dem Benutzer mit einem Programmcode korrelierte Schlüsselwörter bereitgestellt werden, die zur Zusammenstellung eines Kommunikationsablaufs aneinandergereiht werden können, wenn anschließend die den einzelnen Schlüsselwörtern zugeordneten Programmcodes zu einem ausführbaren Programm verbunden werden. Diese Maßnahme ermöglicht die Erstellung von beliebigen Testszenarien, die im Rahmen von automatischen Kommunikationsabläufen zum Testen eines Kommunikationsnetzwerkes verwendet werden können. Insbesondere ist es mit dieser Maßnahme möglich, auch Testszenarien zu emulieren, die durch eine Fehlbedienung eines angeschlossenen Geräts resultieren, sowie Unterstützungsdienste wie Anklopfen, Makeln und dergleichen.

Nur durch diese Maßnahme ist die Simulation eines praxisnahen Terminalverhaltens möglich. Die Schlüsselwörter der vorliegenden Erfindung umfassen Schlüsselwörter für Aktionen und Schlüsselwörter für Triggerbedingungen, insbesondere Timer. Es ist möglich, die Timereinstellung durch entsprechende Eingabe in die Eingabemaske pro Durchlauf um ein bestimmtes Zeitintervall zu verändern.

Die aus dem Stand der Technik bekannte Maßnahme würde ein Telekommunikationsnetzwerk bei hoher Belastung nur im Falle von zwei fest vorgegebenen Szenarien testen. Der manuelle Eingabemodus würde nicht berücksichtigen, daß auf einem Telekommunikationsnetzwerk eine Vielzahl von Terminals gleichzeitig mit völlig unterschiedlichen Aktionen aktiv sind. Erst durch die Erfindung wird es somit ermöglicht, daß ein Telekommunikationsnetzwerk praxisnah getestet werden kann. Erst durch diese Maßnahme lassen sich tatsächliche Rückschlüsse auf die Performance eines Telekommunikationsnetzwerks geben. Im Hinblick darauf, daß bei einem unzureichenden Test falsche Erkenntnisse gewonnen werden können und der Zugang von Telekommunikationsterminals ermöglicht wird, die das gesamte Telekommunikationsnetzwerk zum Zusammenbruch führen können, können durch die Maßnahmen der vorliegenden Erfindung derartig schwerwiegende Probleme vermieden werden.

Bei einer besonders bevorzugten Ausführungsform des erfindungsgemäßen Verfahrens können die Schlüsselwörter von einem Benutzer manuell über eine Tastatur in die Eingabemaske eingegeben werden. Bevorzugt werden die von dem Benutzer eingegebenen Schlüsselwörter daraufhin überprüft, ob sie Teil der Vielzahl bereitgestellter Schlüsselwörter sind, und falls nicht, eine entsprechende Meldung an den Benutzer ausgegeben. Diese Maßnahme stellt sicher, daß durch den Benutzer nur Schlüsselwörter eingegeben werden können, die tatsächlich erlaubt sind. Darüberhinaus kann auch vorgesehen sein, daß eine automatische Überprüfung der Syntax der eingegebenen Schlüsselwörter erfolgt, d.h. ob die Zusammenstellung der Schlüsselwörter plausibel ist. Sofern die von dem Benutzer zusammengestellten Schlüsselwörter in dieser Form keinen Sinn machen, z. B. Auflegen vor dem Abheben eines Telefons, wird eine entsprechende Meldung an den Benutzer ausgegeben.

Zur weiteren Vereinfachung kann vorgesehen werden, daß dem Benutzer die Vielzahl bereitgestellter Schlüsselwörter in einem Auswahlfenster der Anzeigevorrichtung angezeigt werden, von wo sie von dem Benutzer, insbesondere durch Anklicken oder Verschieben, zur Zusammenstellung des Kommunikationsablaufs ausgewählt werden können. Durch diese Maßnahme wird sichergestellt, daß kein Vertippen oder keine Falscheingabe erfolgt, d.h. in diesem Fall kann eine Überprüfung der eingegebenen Wörter daraufhin, ob sie Teil der Vielzahl bereitgestellter Schlüsselwörter sind, entfallen.

Bevorzugt ist der Kommunikationslauf so ausgebildet, daß er ein Start-Szenario und/oder ein Call-Szenario und/oder ein Stop-Szenario umfaßt, wobei in dem Start-Szenario eine Initialisierung des Terminals durchgeführt wird, im Call-Szenario der Kommunikationsablauf durchgeführt wird und im Stop-Szenario das Terminal in einen definierten Endzustand gebracht wird. Diese Gliederung erlaubt eine übersichtliche Erstellung eines automatisch auszuführenden Kommunikationsablaufs, insbesondere sind hierdurch die einmalig auszuführenden Aktionen beim Start bzw. beim Beenden eines Testlaufs getrennt zu programmieren von den automatisch vielfach auszuführenden Aktionen.

Bei dem erfindungsgemäßen Testgerät ist bevorzugt, daß der von dem Benutzer eingebbare Kommunikationsablauf mindestens eines Terminals einer Benutzerschnittstelle zugeordnet ist, die in dem Testgerät als Programmcode vorliegt. Insbesondere bei protokollspezifischer Ausbildung der Terminalschicht ermöglicht die darauf aufzusetzende Benutzerschnittstelle die einfache Programmierung eines Kommunikationsablaufstests zu Testzwecken.

Das erfindungsgemäße Testgerät kann ein, bevorzugt jedoch mehrere Terminals umfassen. Insbesondere können mit einer Benutzerschnittstelle mehrere Terminals simuliert werden.

Die Eingabe der Schlüsselwörter zur Zusammenstellung eines Kommunikationsablaufs kann für mindestens ein Terminal einer Kommunikation separat erfolgen. Dies eröffnet die Möglichkeit, jedem Terminal an der Kommunikation oder zumindest einzelnen Terminals an der Kommunikation besondere Aktionen zuzuweisen.

Insbesondere im Hinblick auf einen automatischen Kommunikationsablauf ist es besonders vorteilhaft, wenn die Eingabe der Schlüsselwörter zur Zusammenstellung zumindest identischer Teile von Kommunikationsabläufen für mindestens zwei Terminals an der Kommunikation dadurch bewirkbar ist, daß in einer Eingabemaske eingebbar ist, für welche Terminals der betreffende Kommunikationsablauf anzuwenden ist. Hierdurch kann durch Spezifizierung eines einzigen Kommunikationsablaufs dieser einer Vielzahl von Terminals zugewiesen werden, wodurch sich komplexe Testbedingungen zum Testen eines Telekommunikationsnetzwerks realisieren lassen.

Schließlich umfaßt die vorliegende Erfindung auch ein Verfahren zum Testen eines Telekommunikationsnetzwerks, bei dem zunächst ein erfindungsgemäßes Testgerät mit einem Telekommunikationsnetzwerk verbunden wird, anschließend mindestens ein Terminal gemäß dem erfindungsgemäßen Verfahren emuliert wird und schließlich das hierbei erzeugte ausführbare Programm gestartet wird.

Weitere vorteilhafte Ausführungsformen der Erfindung sind in den Unteransprüchen definiert.

Im folgenden wird ein Ausführungsbeispiel unter Hinweis auf die beigefügten Zeichnungen näher beschrieben. Es stellen dar:
- Fig. 1:: eine Benutzeroberfläche eines aus dem Stand der Technik bekannten Testgeräts;
- Fig. 2:: eine Benutzeroberfläche eines erfindungsgemäßen Testgeräts;
- Fig. 3:: ein Ablaufdiagramm für einen Kommunikationsablauf im automatischen Modus;
- Fig. 4:: eine weitere Benutzeroberfläche eines erfindungsgemäßen Testgeräts.

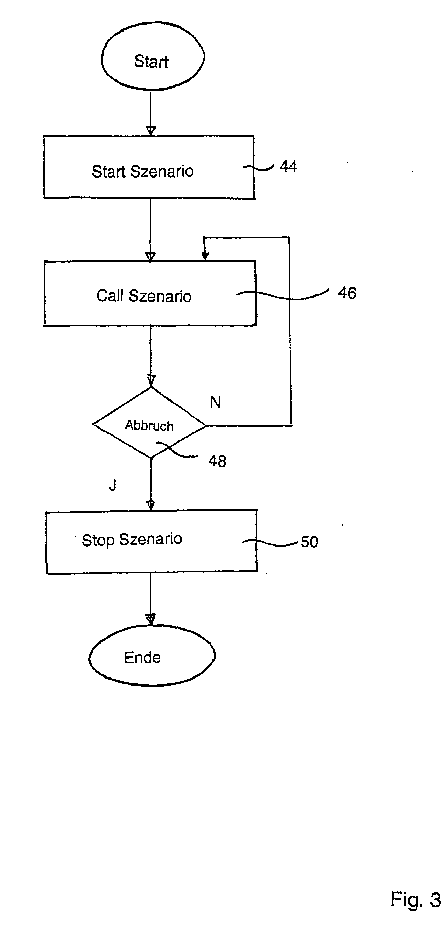

Zunächst wird auf Fig. 3 Bezug genommen, in der der Kommunikationsablauf in einem automatischen Modus eines erfindungsgemäßen Testgeräts dargestellt ist. Nach dem Start wird zunächst einmal ein Start-Szenario 44 durchlaufen, indem die Initialisierung eines Terminals stattfindet, beispielsweise durch den Befehl "Attach" für eine GPRS-Terminalschicht oder "Location update" für eine GSM-Terminalschicht.

Anschließend wird im Schritt 46 das sogenannte Call-Szenario durchlaufen und zwar im Automatikmodus solange, bis von einem Benutzer ein Abbruch erzeugt, wird wie im Block 48 angedeutet. D.h. solange kein Abbruch erfolgt, wird der Schritt 46 fortwährend wiederholt, während im Fall eines Abbruchs der Ablauf übergeht zu einem Stop-Szenario 50. Im Schritt 50 wird das Terminal in einen definierten Endzustand gebracht, beispielsweise durch den Befehl "DETACH" bei einer GPRS-Terminalschicht.

In einer nicht dargestellten Ausführungsform kann jedoch auch vorgesehen werden, daß eine Zahl vorgebbar ist und Schritt 46 sooft durchlaufen wird, wie mit diesem Zahlenwert angegeben.

Im Anzeigefenster 32 von Fig. 2 bezeichnet der Menüpunkt 52 das Start-Szenario, Menüpunkt 54 das Call-Szenario sowie der Menüpunkt 56 das Stop-Szenario. Im dargestellten Beispiel ist der Menüpunkt 54 schwarz unterlegt, das heißt, daß sich die Eingabemaske im Eingabemodus befindet, so daß ein Benutzer in die zum Menüpunkt 54 zugehörige Zeile 58 Schlüsselwörter eingeben kann. Der Benutzer kann hierbei aus Schlüsselwörtern auswählen, die ihm in einem dritten Anzeigefenster 60 angeboten werden. Im vorliegenden Fall hat der Benutzer in die Zeile 58 die Sequenz "DIAL, OFFHOOK, WAIT T1, ONHOOK" von Hand eingegeben. Gemäß der schwarzen Hinterlegung des Menüpunkts 30 im Anzeigefenster 24 ist dies der Kommunikationsablauf, mit dem das Terminal 1 zur Kommunikation auf dem Telekommunikationsnetzwerk, an das der Protokolltester angeschlossen ist, beiträgt. Sobald ein Benutzer ein Schlüsselwort in die Zeile 58 eingegeben hat, findet in dem erfindungsgemäßen Testgerät automatisch eine Überprüfung statt, ob dieses eingegebene Schlüsselwort eines der Schlüsselworte ist, die im Anzeigefenster 60 angeboten werden. Falls dies nicht der Fall ist, wird im Fenster 60 eine entsprechenden Meldung an den Benutzer ausgegeben.

### Beispiel für ein Start-Szenario:

### WAIT T1, ATTACH, WAIT 250

Hierdurch wird folgende Funktion realisiert: Zunächst wird der Timer T1 gestartet. Nach Ablauf der Zeitspanne T1 wird die Funktion "Attach" ausgeführt und ein 250 ms Timer gestartet. Nach Ablauf der 250 ms wird das Call-Szenario gestartet.

### 1. Beispiel für ein Call-Szenario:

### DIAL, OFFHOOK, WAIT Tdur, ONHOOK, WAIT T3

Dieses Szenario führt zunächst die Dial-Funktion aus, beispielsweise durch Wählen der einer Variablen "Digit String" zugewiesenen Nummer. Danach wird abgehoben, der Timer Tdur gestartet und nach dessen Ablauf legt auf. Anschließend wird der Timer T3 gestartet und nach Ablauf von T3 beginnt das Szenario erneut mit dem Ausführen der Dial-Funktion.

### 2. Beispiel für ein Call-Szenario:

### OFFHOOK, DIAL, WAIT Tdur, ONHOOK, WAIT T3

Dieses Beispiel ist dem ersten Beispiel ähnlich. Jedoch werden hier die Nummern in überlappender Weise gewählt. Die Zeitverzögerung zwischen den einzelnen Nummern können in einer Variable "Digit separation time" angegeben werden.

### 3. Beispiel für ein Call-Szenario:

### RING, OFFHOOK, RELEASE, ONHOOK

Dies ist ein Beispiel für einen beendenden Anruf. Wenn das Terminal klingelt, wird abgehoben. Nach dem Erhalt einer Freigabe vom Peer (d.h. das anrufende Terminal wird zurückgesetzt), wird wieder aufgelegt.

### Beispiel für ein Stop-Szenario:

### WAIT T7, DETACH

Bei diesem Szenario wird die "Detach"-Funktion nach Ablauf des Timers T7 ausgeführt.

Beispielhaft zeigt Tabelle 1 eine Auflistung von Schlüsselwörtern, die bei der vorliegenden Erfindung Verwendung finden können:

| Schlüsselwort: | Beschreibung: |
|---|---|
| OFFHOOK | Abheben des Telefonhörers |
| ONHOOK | Auflegen des Telefonhörers |
| DIAL | Wähle Telefonnummer |
| DIGIT <N> | Wähle bestimmtes Zeichen (0..9, *, #) |
| WAIT | Warte eine bestimmte Zeitspanne in ms oder einen definierten Timer T1 bis T10, Toffset, Trel, Tdur |
| RING | Warten bis das Terminal klingelt, Trigger zum Beantworten von Anrufen |
| RELEASE | Warten bis das Terminal ist ausgelöst wird, z. Bsp. Trigger für Auflegen |
| FLASH | Flashfunktion für analoge Endgeräte |
| ENTER | Enter, Abschluß einer Eingabe bei ISDN Endgeräten |
| SUSPEND | Suspendfunktion bei ISDN Endgeräten |
| RESUME | Resumefunktion bei ISDN Endgeräten |
| ATTACH | Attachfunktion bei GPRS Endgeräten |
| DETACH | Detachfunktion bei GPRS Endgeräten |
| RAU | Rau-funktion bei GPRS Endgeräten |
| PTMSI | P-TMSI Reallocation für GPRS Endgeräte |
| PDPC_ACT | PDPC Activation für GPRS Endgeräte |
| PDPC_DEACT | PCPC Deactivation für GPRS Endgeräte |
| PDPC_MODI | PDPC Modification für GPRS Endgeräte |
| DATA_SEND | Sende Daten |
| DATA_RECV | Empfange Daten |
| TOGGLE_PDPC | Toggle PDPC für GPRS Endgeräte |
| TOGGLE_POS | Toggle Position für GPRS Endgeräte |
| RESET_SUBS | Zurücksetzen des Terminals |
| LOCATON_UPDATE | Location Update Funktion für Mobilterminals |
| LOCATION_CANCEL | Location Cancel Funktion für Mobilterminals |
| SEND_ROUTING_INFO | Sende Routing Info Funktion für Mobilterminals |
| SEND_PARAMETERS | Sende Parameter Funktion für Mobilterminals |
| SEND_AUTH | Sende Authentisierung Funktion für Mobilterminals |

Die in Tabelle 1 aufgelisteten Schlüsselwörter sind lediglich beispielhaft zu verstehen. Je nach Anwendungsfall, das heißt insbesondere nach dem verwendetem Protokoll bzw. der zu emulierenden Protokollschicht können, wie für den Fachmann offensichtlich, auch andere Schlüsselwörter sinnvoll und nützlich sein.

Jedem dieser Schlüsserwörter ist ein Programmcode zugeordnet. Der Programmcode mehrerer Schlüsselwörter wird von einer im Testgerät vorhandenen Kompiliervorrichtung nach Beendigung der Eingabe zu einem ausführbaren Programm verbunden.

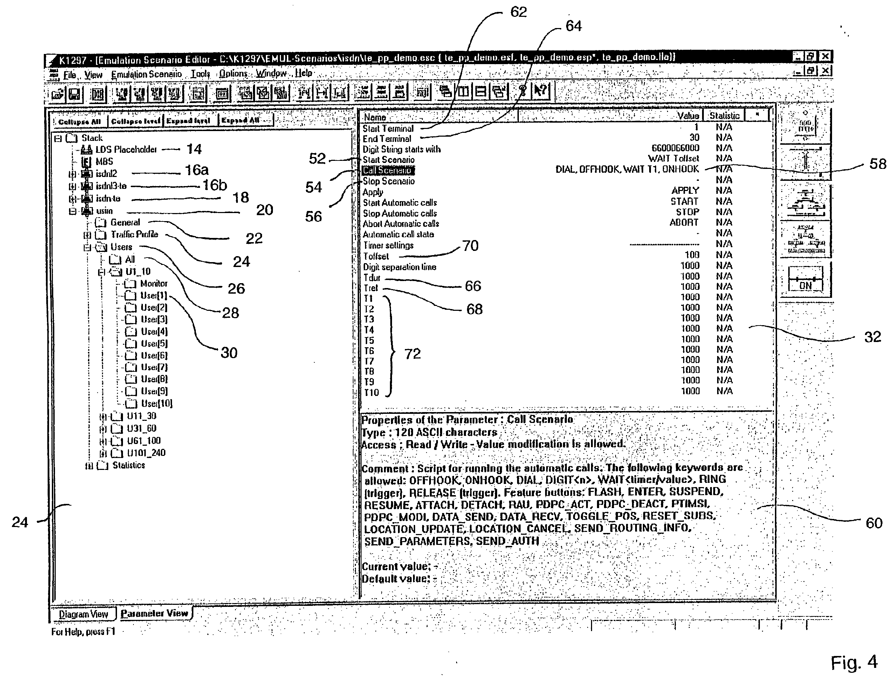

Fig. 4 zeigt ebenfalls die Parameterview-Benutzeroberfläche des erfindungsgemäßen Testgeräts, wobei Elemente, die denen von Fig. 2 entsprechen, mit entsprechenden Bezugszeichen gekennzeichnet sind. Bei der Benutzeroberfläche von Fig. 4 ist der Menüpunkt 28 dunkel hinterlegt, dies entspricht einem Eingabemodus, bei dem einer Vielzahl von Terminals derselbe Kommunikationsablauf zugewiesen wird. Im Fenster 32 ist mit Menüpunkt 62 definiert, daß der einzugebende Kommunikationsablauf mit Terminal 1 beginnt und gemäß Menüpunkt 64 mit Terminal 30 endet. Mit den Menüpunkten 66 (Tdur) und 68 (Trel) wird bei freigegebener Kommunikation die Dauer zur Eröffnung eines Anrufs berechnet und angezeigt, während mit Trel die Zeit angezeigt wird, um einen Anruf zu beenden. Der mit Menüpunkt 70 spezifizierte Timer Toffset kann für alle Szenarios benutzt werden, bei denen eine Verzögerung zwischen den einzelnen Terminals erwünscht ist, beispielsweise durch Berechnung des tatsächlichen Timerwerts über Toffset mal Terminalnummer. In den Menüpunkten 72 werden weitere Timer bereitgestellt.

Nicht dargestellt ist die Möglichkeit, einen festen Timerwert, beispielsweise T1 oder T2, pro Durchlauf um eine bestimmte Zeitspanne zu erhöhen.

In dem vorliegenden Eingabemodus könnten nunmehr in einem nächsten Schritt beispielsweise den Terminals 31 bis 60 ein anderes Call-Szenario zugewiesen werden.
Den Terminals 61 bis 100 könnten je nach Belieben spezielle Kommunikationsabläufe zugewiesen werden, wie dies über das in Fig. 2 dargestellte Eingabefenster möglich ist.

Auf diese Weise läßt sich ein praxisnahes Terminalverhalten mit dem erfindungsgemäßen Testgerät sehr gut realisieren.

## Patentansprüche

1. Verfahren zum Emulieren eines Terminals zum Testen eines Telekommunikationsnetzwerks, wobei dem Terminal eine zur Durchführung eines automatischen Kommunikationsablaufs von einem Benutzer programmierbare Benutzerschnittstelle (20) zugeordnet ist, wobei die Programmierung der Benutzerschnittstelle folgende Schritte umfaßt:
a) Bereitstellen einer Vielzahl von Schlüsselwörtern, aus denen ein Kommunikationsablauf des Terminals zusammenstellbar ist, wobei mit jedem Schlüsselwort ein Programmcode korreliert ist;
b) Bereitstellen einer Eingabemaske (58) auf einer Anzeigevorrichtung, in die durch einen Benutzer eine Abfolge von mindestens zwei Schlüsselwörtern zur Zusammenstellung des Kommunikationsablaufs des Terminals eingebbar ist;
c) Verbinden der Programmcodes, die mit den von einem Benutzer in die Eingabemaske eingegebenen Schlüsselwörtern korreliert sind, zu einem ausführbaren Programm.

2. Verfahren nach Anspruch 1,
**dadurch gekennzeichnet,**
**daß** in Schritt b) die Schlüsselwörter von einem Benutzer manuell über eine Tastatur in die Eingabemaske (58) eingegeben werden.

3. Verfahren nach Anspruch 2,
**dadurch gekennzeichnet,**
**daß** die von dem Benutzer eingegebenen Schlüsselwörter daraufhin überprüft werden, ob sie Teil der Vielzahl von in Schritt a) bereitgestellten Schlüsselwörter sind, und falls nicht, eine entsprechende Meldung an den Benutzer ausgegeben wird.

4. Verfahren nach Anspruch 1,
**dadurch gekennzeichnet,**
**daß** in Schritt b) einem Benutzer die Vielzahl von in Schritt a) bereitgestellten Schlüsselwörter in einem Auswahlfenster (60) der Anzeigevorrichtung angezeigt werden, von wo sie von dem Benutzer, insbesondere durch Anklicken oder Verschieben, ausgewählt werden können.

5. Verfahren nach einem der vorhergehenden Ansprüche,
**dadurch gekennzeichnet,**
**daß** der Kommunikationsablauf ein Start-Szenario (44; 52) und/oder ein Call-Szenario (46; 54) und/oder ein Stop-Szenario (50; 56) umfaßt, wobei in dem Start-Szenario (44; 52) eine Initialisierung des Terminals durchgeführt wird, im Call-Szenario (46; 54) der Kommunikationsablauf durchgeführt wird und im Stop-Szenario das Terminal in einen definierten Endzustand gebracht wird.

6. Testgerät zum Testen eines Telekommunikationsnetzwerks umfassend:
- eine Speichervorrichtung, in der Schlüsselwörter abgelegt sind, aus denen ein Kommunikationsablauf mindestens eines Terminals zur Teilnahme an einer Kommunikation zusammenstellbar ist, sowie der mit jedem Schlüsselwort korrelierte Programmcode;
- einer Anzeigevorrichtung mit einer Eingabemaske (58), in die durch einen Benutzer eine Abfolge von mindestens zwei Schlüsselwörtern zur Zusammenstellung des Kommunikationsablaufs des mindestens einen Terminals eingebbar ist; und
- einer Kompiliervorrichtung, in der der Programmcode, der mit den von dem Benutzer in die Eingabemaske eingegebenen Schlüsselwörtern korreliert ist, zu einem ausführbaren Programm verbindbar ist.

7. Testgerät nach Anspruch 6,
**dadurch gekennzeichnet,**
**daß** der von dem Benutzer eingebbare Kommunikationsablauf mindestens eines Terminals einer Benutzerschnittstelle (20) zugeordnet ist, die in dem Testgerät als Programmcode vorliegt.

8. Testgerät nach Anspruch 7,
**dadurch gekennzeichnet,**
**daß** jeder Benutzerschnittstelle eine Vielzahl von Terminals zugeordnet sind.

9. Testgerät nach Anspruch 8,
**dadurch gekennzeichnet,**
**daß** jedem Terminal ein Teilnehmer an der Kommunikation zugeordnet ist.

10. Testgerät nach einem der Ansprüche 7 bis 9,
**dadurch gekennzeichnet,**
**daß** die Eingabe der Schlüsselwörter zur Zusammenstellung eines Kommunikationsablaufs für mindestens ein Terminal an der Kommunikation separat erfolgt.

11. Testgerät nach einem der Ansprüche 7 bis 10,
**dadurch gekennzeichnet,**
**daß** die Eingabe der Schlüsselwörter zur Zusammenstellung zumindest identischer Teile von Kommunikationsabläufen für mindestens zwei Terminals dadurch bewirkbar ist, daß in einer Eingabemaske (24, 62, 64) eingebbar ist, für welche Terminals der betreffende Kommunikationsablauf anzuwenden ist.

12. Verfahren zum Testen eines Telekommunikationsnetzwerks folgende Schritte umfassend:
a) Verbinden eines Testgeräts nach einem der Ansprüche 7 bis 11 mit dem Telekommunikationsnetzwerk;
b) Emulieren mindestens eines Terminals gemäß dem Verfahren nach einem der Ansprüche 1 bis 6;
c) Starten des in Schritt b) erzeugten ausführbaren Programms.
